# EUROPEAN PATENT SPECIFICATION

(11) **EP 3 006 871 B1**
(45) Date of publication and mention of the grant of the patent: **08.08.2018**
(21) Application number: 14188018.7
(22) Date of filing: 07.10.2014
(51) Int. Cl.: F25D 25/00, F25D 17/06, F25D 17/04

(54) **Refrigerator with a compartment storing removable food containers having a controlled environment**
Kühlschrank mit einem Fach mit herausnehmbaren Nahrungsmittelbehältern mit kontrollierter Umgebung
Réfrigérateur comportant un compartiment de stockage des récipients alimentaires amovible ayant un environnement contrôlé

(43) Date of publication of application: 13.04.2016
(73) Proprietor: Whirlpool Corporation, Benton Harbor, MI 49022 (US)
(72) Inventor: Moroni, Matteo, 21025 Comerio (IT); Parnisari, Matteo, 21025 Comerio (IT); Whitman, Joshua T., 21025 Comerio (IT)
(74) Representative: Spina, Alessandro

(56) References cited:
- EP-A2- 2 562 495
- WO-A1-2010/119103
- DE-A1-102012 201 399
- US-A- 4 306 616
- US-A- 6 090 422
- US-A1- 2002 083 724
- US-A1- 2008 006 041

## Description

The present invention relates to a refrigerator comprising at least one compartment for storing food items placed in closed containers.

It is well known in the art of refrigeration the need of providing a proper way of storing different kind of foods at different temperatures and at different conditions. For instance, certain foods are preferably stored under vacuum condition in order to increase the shelf-life thereof, while other foods are preferably stored at a low degree of humidity. In the present refrigerators the users attempts to store properly the different food items by placing them into plastic or glass closed containers and by putting such containers at different levels in the fresh food compartment. Of course this arrangement cannot satisfy the precise range of storing temperature required by certain foods.

WO 2010/119103 A1 **discloses a refrigerator according to the preamble of claim 1.** US 2002/083724 A1 **discloses a refrigerator with a food storage and preservation system having a plurality of food storage containers connected to an air treatment module.**

One object of the present invention is to provide a refrigerator which overcomes the above drawback and assures a very precise adjustment of storing condition of food items placed in closed containers.

This object is reached according to the features listed in the appended claims.

According to one embodiment of the invention, the refrigerator has an inner liner that divides the fresh food storage area into two separate compartments, one "normal" fresh food storage compartment, and one innovative compartment for increasing the shelf-life of fresh food items and leftover (already cooked food) stored in close dedicated containers. The mechanical structure of a refrigerator according to the invention is similar to that of a mono-door product with a 4-star freezer compartment, including separate doors to the compartments. However, the compartment for preserving food stored in the containers is an extension of the fresh food compartment and is not used as a freezer. Of course a refrigerator according to the invention can have a freezer compartment as well, and other auxiliary compartments (as wine cooler compartment).

The above compartment designed for food stored in containers has the following capabilities:
- precise temperature regulation of the compartment preferably between 0°C and 3°C;
- significantly faster cooling of the food items placed into this compartment when compared to a normal fresh food compartments;
- ability to actively control the humidity in the compartment;
- ability to actively control the air pressure in the compartment.

The above compartment will be partitioned into multiple bays or "docking stations" that will house removable food storage containers or boxes. These boxes will be similar in design and appearance for instance to a standard plastic Tupperware container. However, the boxes and their corresponding "docking stations" will have special design features that allow for the temperature, humidity, and pressure control described in details in the following description, provided as not limiting example, with reference to the attached drawings in which:

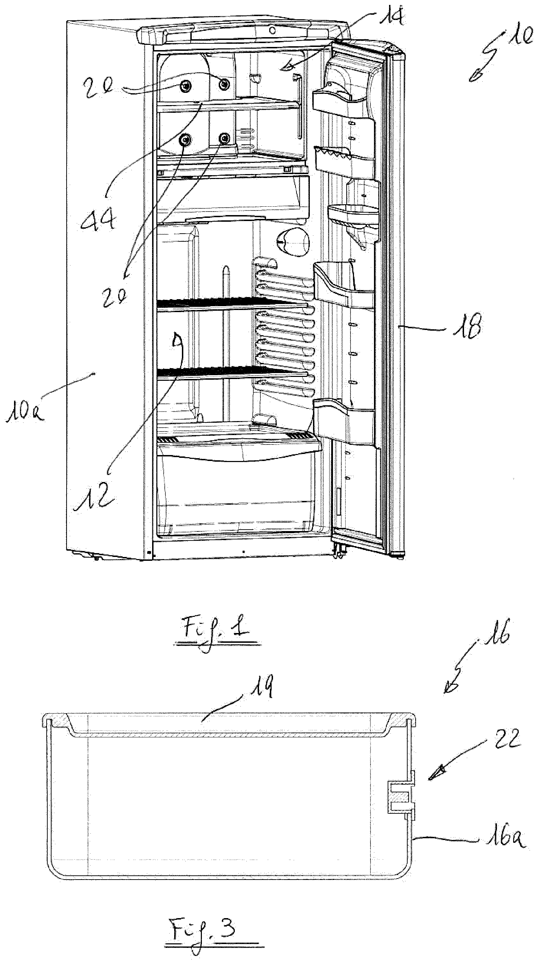

- Figure 1 is a perspective view of a refrigerator according to the invention;
- Figure 2 is a sectioned view of an upper portion of the refrigerator of figure 1 in which containers are placed;
- Figure 3 is a detailed enlarged view of a container shown in figure 2;
- Figure 4 is a rear view of the container of figure 3;
- Figure 5 is a perspective view of a cluster of food containers installed in the refrigerator of figure 1
- Figure 6 is a perspective view of the detail shown in figure 2;
- Figures 7a to 7c are schematical view of how the valve associated to the container of figure 4 works;
- Figure 8 is a schematic view of an air regulation system used in the refrigerator according to the invention;
- Figure 9 is a schematic view of the cooling circuit of the refrigerator shown in figure 1;
- Figure 10 is a side sectioned view of a detail of a refrigerator according to the invention which shows the valve-docking station interface; : and
- Figure 11 is a side sectioned view similar to figure 10 which shows the air regulation system.

With reference to the drawings, a refrigerator 10 according to the invention comprises a cabinet 10a with a lower fresh food compartment 12 and an upper compartment 14 for food stored in closed boxes 16. The compartments 12 and 14 are closed by a single door 18, even if each compartment may have its own door as well. The upper compartment 14 presents, on its rear wall, a plurality of docking devices 20 whose function will be clear in the following description.

The food storage boxes 16 are very similar to a standard "Tupperware" container in size and overall appearance with the following exceptions:
- the walls are thicker and stronger (possibly made of Pyrex) to withstand internal vacuum;
- the bottom part of each box 16 consists preferably of a metallic insert (not shown) for improving heat transfer;
- the back wall 16a has an adjustable valve 22 that mates with the corresponding docking device 20 for access to a humidity and air pressure control system.

Each container 16 has a removable lid 19 which is simply coupled to the container or it can be fastened to the body of the container by means of a snap clip or the like (not shown) with the possible interposition of a gasket (not shown).

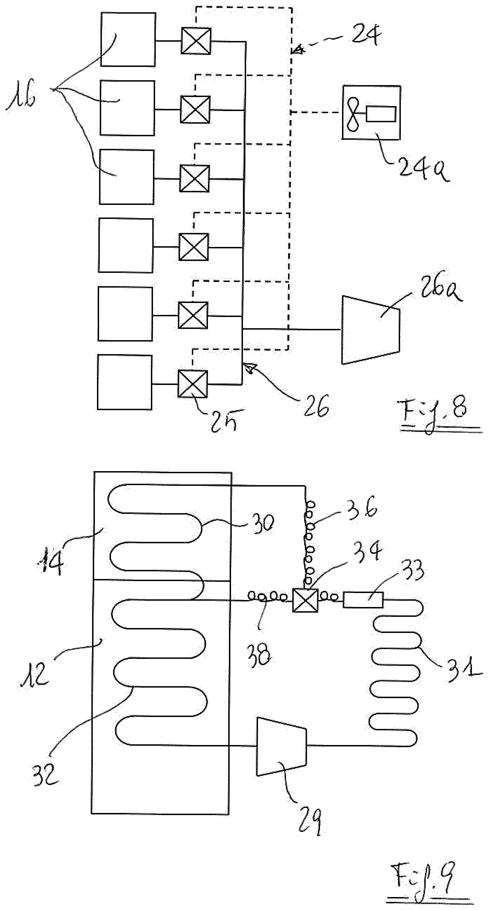

With reference to figure 8, the air regulation system comprises two distinct circuits:
- a fresh control circuit 24 controlled by a fan 24a; and
- a vacuum circuit 26 controlled by a vacuum pump 26a.

All of the docking devices 20 in the upper compartment 14 are connected to the air regulation system in parallel via a port on the back wall of the compartment. When a food storage box 16 is coupled to a docking device 20, the adjustable valve 22 on the back of the food storage box 16 will engage with the port in the docking device 20 to allow the food storage box 16 to access the air regulation system.

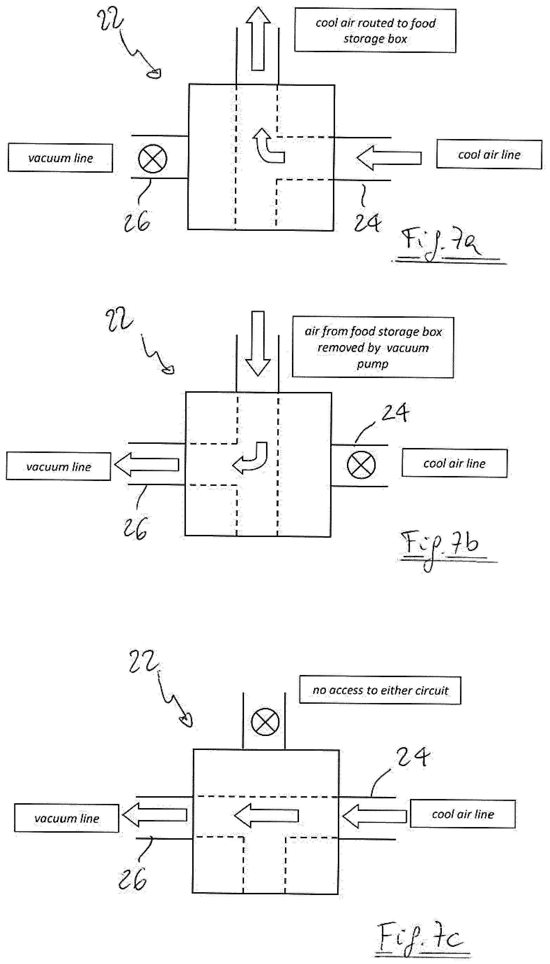

The type of air regulation received by the food storage box 16 depends on the setting of the adjustable valve 22 on the food storage box 16 when it is coupled to the docking device 20. This valve has three available settings shown in figures 7a, 7b and 7c with the following functionalities:
- Normal (figure 7c): the valve 22 will be closed to both parts of the air regulation system;
- Fresh control (figure 7a): the valve 22 will be open to only the fresh control portion 24 of the air regulation system, resulting in low humidity in the food storage box 16;
- Vacuum (figure 7c): the valve 22 will be open to only the vacuum portion 26 of the air regulation system, resulting in low pressure in the food storage box.

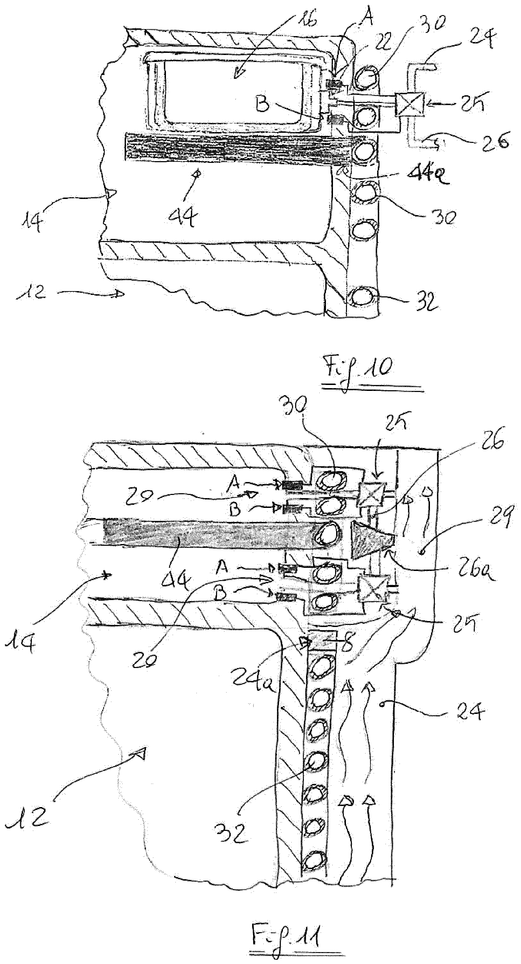

Each docking device 20 will be equipped with two switches or sensors A and B (figures 10 and 11) positioned at the opening to the air regulation system. These switches will detect the actual position of the manual valve 22 of the storage box 16 and will provide feedback to an electronic three-way valve 25 that is connected to the docking station 20, fresh control circuit 24, and vacuum circuit 26. The shape of adjustable manual valve 22 will be designed to engage the switches A and B as follows:
- Normal: Neither switch engaged, electronic three-way valve 25 closed (no access to air regulation system).
- Fresh Control: Switch "A" will be engaged, electronic three-way valve 25 allows access to the fresh control circuit 24.
- Vacuum: Switch "B" will be engaged, electronic three-way valve 25 allows access to the vacuum circuit 26.

There is no valve setting that will result in access to both the fresh control circuit 24 and the vacuum circuit 26 simultaneously, as this situation would not result in the desired preservation conditions in the food storage box 16.

Air will be supplied to the fresh control circuit 24 via a fan 24a that is positioned above a lower evaporator 32. The fan 24a will pull air across the evaporator which will cool the air and also remove moisture from the air by condensing the water out of the air stream. The cool dry air will then be routed to a duct 29 behind upper compartment 14 that supplies air to the electronic three way valves 25 of each docking device 20.

With reference to figure 9, the cooling circuit of the refrigerator 10 comprises a compressor 29, a condenser 31, a filter 33 and two separate evaporators 30 and 32 in series. The evaporator 32 is used for the fresh food compartment 12, while the evaporator 30 is used for the upper compartment 14. The evaporators 30 and 32 will be arranged so that the cooling circuit will allow for independent temperature regulation of the two compartments 12 and 14, resulting in more precise temperature regulation particularly in the upper compartment 14. The circuit comprises also an electrovalve 34 downstream the condenser 31 for diverting the refrigerant flow toward capillary tubes 36 and 38 upstream the evaporator 30 and 32 respectively. The electrovalve 34 is a three way valve which can deliver flow alternatively to one of the evaporators or to both of them.

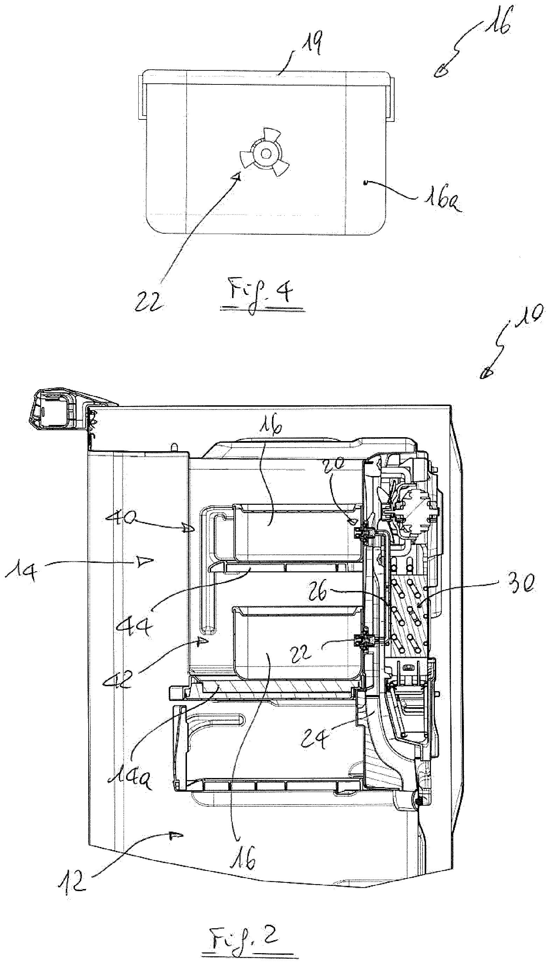

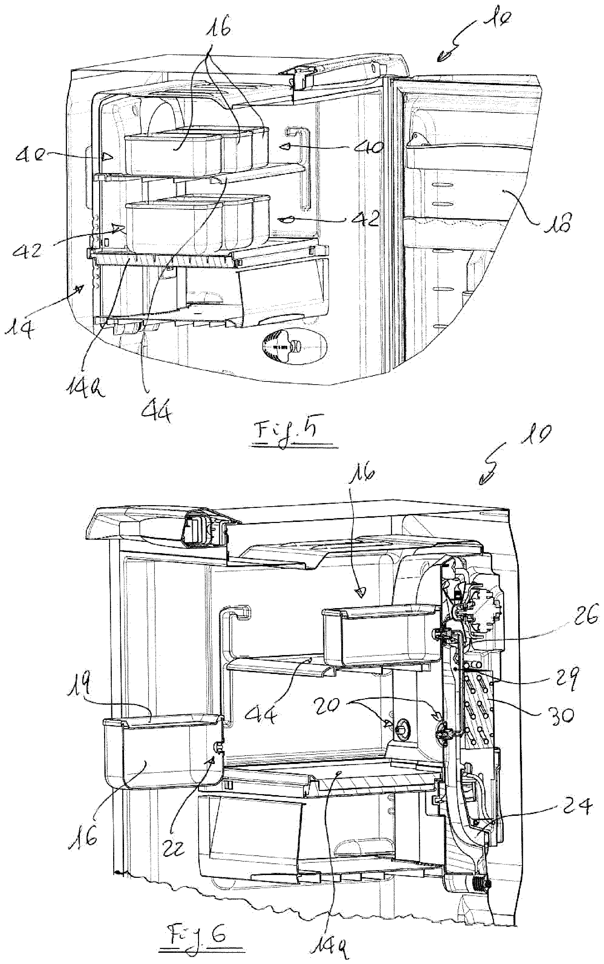

As shown in Figures 2 and 5, the docking devices 20 in the upper compartment 14 are preferably arranged into an upper and lower rows 40 and 42 respectively, with the lower row 42 sitting on the bottom surface 14a of the upper compartment 14 and the upper row 40 sitting on a shelf 44 which is either part or is in conduction heating contact with the evaporator 30 of the upper compartment 14. This shelf 44 is a fast cooling shelf that is fixed to the compartment back wall and side walls. The fast cooling shelf 44 is made of a material with high thermal conductivity and high heat capacity. For example, aluminum, copper, and eutectic material have the desired thermal properties for the construction of this shelf 44. As shown in the embodiment of figure 10, a back edge 44a of the shelf 44 will be in direct contact with an exposed evaporator coil, allowing precise temperature regulation of the entire shelf 44. Such shelf 44 acts as a cooling plate with its temperature regulated by the dedicated evaporator 30 of the upper compartment 14.

When the food storage boxes 16 are placed into the upper row 40 of docking devices 20 on the fast cooling shelf 44, the lower surface 17 of the boxes 16 (preferably realized in a metallic material) will quickly reach the temperature of the entire shelf surface, allowing the food inside to be cooled very quickly. When combined with the fresh control air regulation circuit 24, there is potential for the capability to cool down food items very fast.

The fast cooling shelf 44 is essentially a type of "cold plate", which is quite common in the marketplace. However, the use of a cold plate directly built into the refrigerator compartment 14 for the purpose of chilling food items contained in specific and compatible food storage boxes 16 is an innovative technical solution.

Another innovative aspect of the present invention is the removability of the food storage boxes 16 for use in other applications. The user will be able to use the boxes 16 in connection with the upper dedicated compartment 14, but he/she will also have the option to use them as normal Tupperware containers, use them in the microwave, place in them in the dishwasher, etc.

The present invention is extremely useful to consumers because it provides the capability of regulating in a simple way key factors (temperature, humidity, pressure) that impact food preservation quality of fresh foods and leftovers. The key is that not only does the invention allow the user to regulate these factors, rather it allows the user to regulate them simultaneously to achieve optimal food storage regardless of the type of food or how it was prepared.

The present invention satisfies unmet consumer needs in the area of leftovers and fresh food preservation.

## Claims

1. Refrigerator comprising at least a compartment (14) for storing food items placed in Closed and removable containers (16) and an air regulation system (24, 24a, 26, 26a), the refrigerator comprising a plurality of docking devices (20) connected to the air regulation system in parallel and configured to be coupled with a plurality of said containers (16), wherein said air regulation system (24, 24a, 26, 26a) and said docking devices (20) are configured to draw air from the containers in order to create vacuum therein, **characterized in that** such air regulation system (24, 24a, 26, 26a) and said docking devices (20) are also configured to deliver cool air into the containers, each container (16) comprising a valve device (22) which is configured to be coupled to the docking device (20) and to be manually adjusted in order to connect the container (16) with a cool air circuit (24) or to a vacuum circuit (26) of the air regulation system (24, 24a, 26, 26a).

2. Refrigerator according to claim 1, wherein the valve device (22) is configured also to prevent any connection of the container (16) with the cool air circuit (24) and with the vacuum circuit (26).

3. Refrigerator according to claim 1 or 2, wherein each docking device (20) comprises sensor devices (A, B) configured to deliver signals for detecting the actual position of the valve device (22) and for driving an automatic valve (25) for connecting the container (16) to the cool air circuit (24) or to the vacuum circuit (26).

4. Refrigerator according to any of the preceding claims, wherein it comprises a refrigeration circuit with at least an evaporator section (30) configured for said compartment (14).

5. Refrigerator according to claim 4, wherein said compartment (14) comprises a plate (44) in heat conduction contact with said evaporator section (30) and on which at least some of said closed containers (16) are placed.

6. Refrigerator according to claim 5, wherein at least said containers (16) placed on said plate (44) are provided with a bottom part (17) made of highly thermal conductive material.

7. Refrigerator according to claim 5 or 6, wherein the plate (44) presents an edge (44a) in contact or integral with the evaporator section (30).

8. Refrigerator according to any of claims 4 to 6, wherein the refrigeration circuit comprises, downwards a condenser (31), a three-way electrovalve configured to direct the refrigerant flow to said first section (30) of the evaporator or to a second section (32) downwards and in series thereto or to both sections (30, 32).

9. Refrigerator according to claim 1 and 8, wherein the cool air circuit (24) is in heat exchange relationship with the second section (32) of the refrigeration circuit.

## Patentansprüche

1. Kühlschrank, umfassend mindestens ein Fach (14) zum Aufbewahren von Lebensmitteln, die in geschlossenen und entfernbaren Behältern (16) platziert sind, und ein Luftregulierungssystem (24, 24a, 26, 26a), wobei der Kühlschrank eine Vielzahl von Andockvorrichtungen (20) umfasst, die mit dem Luftregulierungssystem parallel verbunden sind und die konfiguriert sind, um mit einer Vielzahl von den Behältern (16) gekoppelt zu werden, wobei das Luftregulierungssystem (24, 24a, 26, 26a) und die Andockvorrichtungen (20) konfiguriert sind, um Luft von den Behältern abzuziehen, um ein Vakuum darin zu schaffen, **dadurch gekennzeichnet, dass** ein solches Luftregulierungssystem (24, 24a, 26, 26a) und die Andockvorrichtungen (20) auch konfiguriert sind, um kühle Luft in die Behälter zu liefern, wobei jeder Behälter (16) eine Ventilvorrichtung (22) umfasst, die konfiguriert ist, um mit der Andockvorrichtung (20) gekoppelt zu werden und um manuell eingestellt zu werden, um den Behälter (16) mit einem Kühlluftkreislauf (24) oder mit einem Vakuumkreislauf (26) des Luftregulierungssystems zu verbinden (24, 24a, 26, 26a).

2. Kühlschrank nach Anspruch 1, wobei die Ventilvorrichtung (22) auch konfiguriert ist, um eine jegliche Verbindung des Behälters (16) mit dem Kühlluftkreislauf (24) und mit dem Vakuumkreislauf (26) zu verhindern.

3. Kühlschrank nach Anspruch 1 oder 2, wobei jede Andockvorrichtung (20) Sensorvorrichtungen (A, B) zum Erfassen der gegenwärtigen Position der Ventilvorrichtung (22) und zum Antreiben eines automatischen Ventils (25) zum Verbinden des Behälters (16) mit dem Kühlluftkreislauf (24) oder mit dem Vakuumkreislauf (26) umfasst.

4. Kühlschrank nach einem der vorstehenden Ansprüche, wobei er einen Kühlkreislauf mit zumindest einem Verdampferabschnitt (30) umfasst, der für das Fach (14) konfiguriert ist.

5. Kühlschrank nach Anspruch 4, wobei das Fach (14) eine Platte (44) in wärmeleitendem Kontakt mit dem Verdampferabschnitt (30) umfasst und auf dieser zumindest einige der geschlossenen Behälter (16) platziert sind.

6. Kühlschrank nach Anspruch 5, wobei zumindest die Behälter (16), die auf der Platte (44) platziert sind, mit einem Bodenteil (17) versehen sind, der aus einem äußerst wärmeleitenden Material gefertigt ist.

7. Kühlschrank nach Anspruch 5 oder 6, wobei die Platte (44) eine Kante (44a) aufweist, die mit dem Verdampferabschnitt (30) in Kontakt oder einstückig ist.

8. Kühlschrank nach einem der Ansprüche 4 bis 6, wobei der Kühlkreislauf abwärts von einem Kondensator (31) ein Dreiwege-Elektroventil umfasst, das konfiguriert ist, um die Kältemittelströmung zu dem ersten Abschnitt (30) des Verdampfers oder zu einem zweiten Abschnitt (32), abwärts und in Reihe davon, oder zu beiden Abschnitten (30, 32) zu leiten.

9. Kühlschrank nach Anspruch 1 und 8, wobei der Kühlluftkreislauf (24) in einer Wärmeaustauschbeziehung mit dem zweiten Abschnitt (32) des Kühlkreislaufs steht.

## Revendications

1. Réfrigérateur comprenant au moins un compartiment (14) pour stocker des articles alimentaires placés dans des récipients fermés et amovibles (16) et un système de régulation d'air (24, 24a, 26, 26a), le réfrigérateur comprenant une pluralité de dispositifs annexes (20) raccordés au système de régulation d'air en parallèle et configurés pour être couplés à une pluralité desdits récipients (16), dans lequel ledit système de régulation d'air (24, 24a, 26, 26a) et lesdits dispositifs annexes (20) sont configurés pour aspirer de l'air des récipients afin d'y créer un vide, **caractérisé en ce que** ce système de régulation d'air (24, 24a, 26, 26a) et lesdits dispositifs annexes (20) sont également configurés pour délivrer de l'air froid dans les récipients, chaque récipient (16) comprenant un dispositif à vanne (22) qui est configuré pour être couplé au dispositif annexe (20) et pour être manuellement ajusté afin de raccorder le récipient (16) à un circuit d'air froid (24) ou à un circuit à vide (26) du système de régulation d'air (24, 24a, 26, 26a).

2. Réfrigérateur selon la revendication 1, dans lequel le dispositif à vanne (22) est configuré également pour empêcher tout raccordement du récipient (16) au circuit d'air froid (24) et au circuit à vide (26).

3. Réfrigérateur selon la revendication 1 ou 2, dans lequel chaque dispositif annexe (20) comprend des dispositifs de détection (A, B) pour détecter la position réelle du dispositif à vanne (22) et pour commander une vanne automatique (25) pour raccorder le récipient (16) au circuit d'air froid (24) ou au circuit à vide (26).

4. Réfrigérateur selon l'une quelconque des revendications précédentes, dans lequel il comprend un circuit de réfrigération avec au moins une section d'évaporateur (30) configurée pour ledit compartiment (14).

5. Réfrigérateur selon la revendication 4, dans lequel ledit compartiment (14) comprend une plaque (44) en contact de conduction thermique avec ladite section d'évaporateur (30) et sur laquelle au moins certains desdits récipients fermés (16) sont placés.

6. Réfrigérateur selon la revendication 5, dans lequel au moins lesdits récipients (16) placés sur ladite plaque (44) sont pourvus d'une partie de fond (17) constituée d'un matériau fortement thermoconducteur.

7. Réfrigérateur selon la revendication 5 ou 6, dans lequel la plaque (44) présente un bord (44a) en contact ou formé d'un seul tenant avec la section d'évaporateur (30).

8. Réfrigérateur selon l'une quelconque des revendications 4 à 6, dans lequel le circuit de réfrigération comprend vers le bas un condenseur (31), une électrovanne à trois voies configurée pour diriger l'écoulement de réfrigérant vers ladite première section (30) de l'évaporateur ou vers une seconde section (32) vers le bas et en série avec celle-ci ou vers les deux sections (30, 32).

9. Réfrigérateur selon les revendications 1 et 8, dans lequel le circuit d'air froid (24) est en relation d'échange thermique avec la seconde section (32) du circuit de réfrigération.
